# EUROPEAN PATENT APPLICATION

(11) **EP 1 878 609 A2**
(43) Date of publication of application: **16.01.2008**
(21) Application number: 07252657.7
(22) Date of filing: 30.06.2007
(51) Int. Cl.: B60N 2/24, A61G 3/08

(54) **Wheelchair accomodation in vehicles**

(30) Priority: 11.07.2006 GB 0613655
(71) Applicant: Passenger Lift Services Ltd., Smethwick, Warley, West Midlands B66 1QG (GB)
(72) Inventor: Beck, Adam, Oldbury West Midlands, B69 1JP (GB)
(74) Representative: Wilson, Alan Stuart

(57) **Abstract**

A vehicle seating system comprises a support beam (30) and a mounting for the support beam arranged to enable the support beam to pivot about a vertical axis between an unfolded position and a folded position. A seat (20) is supported on the support beam (30) and comprises a base (40) and a back (42). The base (40) is pivotable about a horizontal axis between an in use position and a folded position.

## Description

The present invention relates to passenger carrying vehicles, such as buses, coaches, minibuses and trains, and in particular to vehicle seating systems arranged to allow the accommodation of wheelchairs on such vehicles.

It is well known to adapt buses, coaches, minibuses and trains to accommodate wheelchair passengers. Typically one or more of the normal seats are either permanently removed, or modified such that they can be folded or partially removed so as to make space for a wheelchair. Typically this space needs to be near the door of the vehicle, which may be towards the front of a bus, where the door as at the front on the near side of the bus, or the rear of a minibus where the door is in the rear, or near the centre of a train carriage. However, these known systems tend to be complicated and awkward to operate.

The present invention provides a vehicle seating system comprising support means and a mounting for the support means arranged to enable the support means to pivot about a vertical axis between an unfolded position and a folded position, and a seat supported on the support means and comprising a base and a back, wherein the base is pivotable about a horizontal axis between an in use position and a folded position.

The present invention further provides a vehicle seating system comprising a seat base and a seat back, wherein the seat back comprises an upper back portion and a lower back portion, and the lower back portion is pivotable about a horizontal axis from an in use position upwards into a folded position and the base is pivotable about a horizontal axis upwards into a folded position.

The present invention further provides a vehicle including a seating system according to the invention.

Preferred embodiments of the present invention will now be described by way of example only with reference to the accompanying drawings in which:
**Figure 1** is a side view of a seat system according to an embodiment of the invention;
**Figure 2** is a side view of a wheelchair restraint system for use with the seat system of Figure 1;
**Figure 3** is a front view of the seat system of Figure 1 in an unfolded condition;
**Figure 4** is a plan view of the seat system of Figure 1 in the unfolded condition;
**Figure 5** is a side view of part of the seat system of Figure 1;
**Figure 6** is a plan view a seat of the system of Figure 1;
**Figure 7** is a plan view of the seat system of Figure 1 in a partially folded condition;
**Figures 8 and 9** are side views of the seat of Figure 6 in partially folded conditions;
**Figure 10** is a plan view of the seat of Figure 6 in a partially folded condition;
Figure 11 is a plan view of the seat system of Figure 1 in a further partially folded condition;
Figures 12 and 13 are a side view and plan view of the seat of Figure 6 in a further partially folded condition;
Figure 14 is a plan view of the seating system of Figure 1 in a fully folded condition;
Figure 15 is a front view of the folded system of Figure 14 showing a wheelchair passenger restraint system; and
Figure 16 is a side view of a wheelchair restraint system forming part of a system according to a further embodiment of the invention.

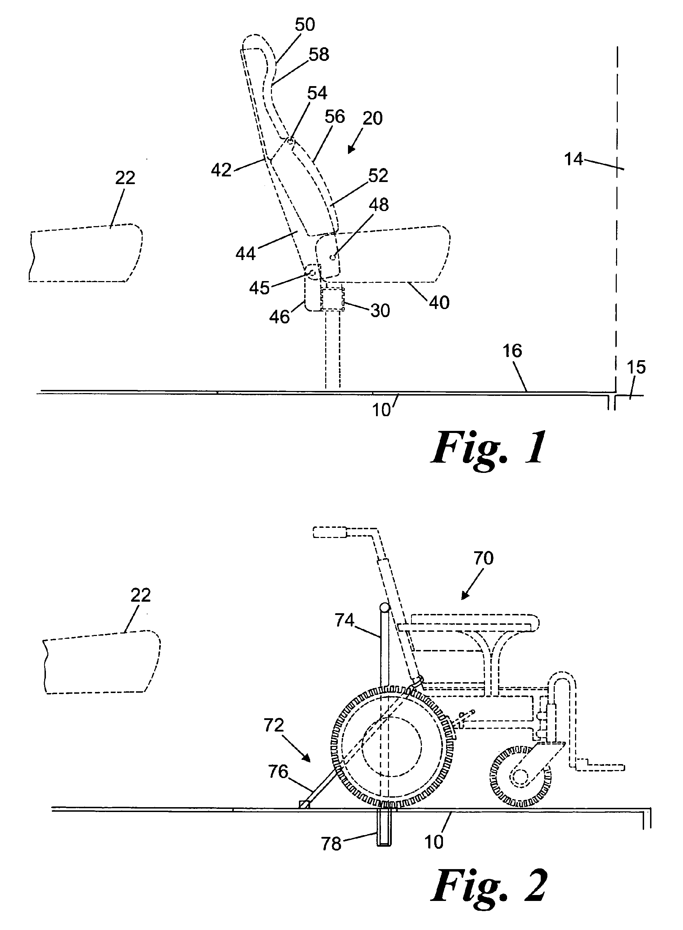

Referring to Figures 1, 3 and 4, a coach comprises a floor 10 and a nearside wall 12 in which a door 14 is provided near the front of the vehicle. Steps 15 lead in a transverse direction across the vehicle up from the door 14 to the level of the floor 10. The floor area 16 to the rear of the steps is substantially flat. A front pair of seats 20, which are foldable, is located to the rear of the steps 15, and further pairs of seats 22 is located behind the front seats 20.

The front pair of seats 20 is supported on a common horizontal support beam 30 which is mounted at one end by means of a pivoting mounting 32 onto the nearside wall 12. The beam 30 can therefore be pivoted through about 90° about a vertical axis between an unfolded or in-use condition in which it extends transverse to the vehicle, perpendicular to the side wall 12, and a folded condition in which it is parallel to the side wall 12. The other end of the beam 30 is supported on a support leg 34, the bottom end of which rests on the floor 10 and can be locked in position in either of the folded or unfolded conditions by respective first and second fixing mechanisms 36, 38 mounted in the floor 10.

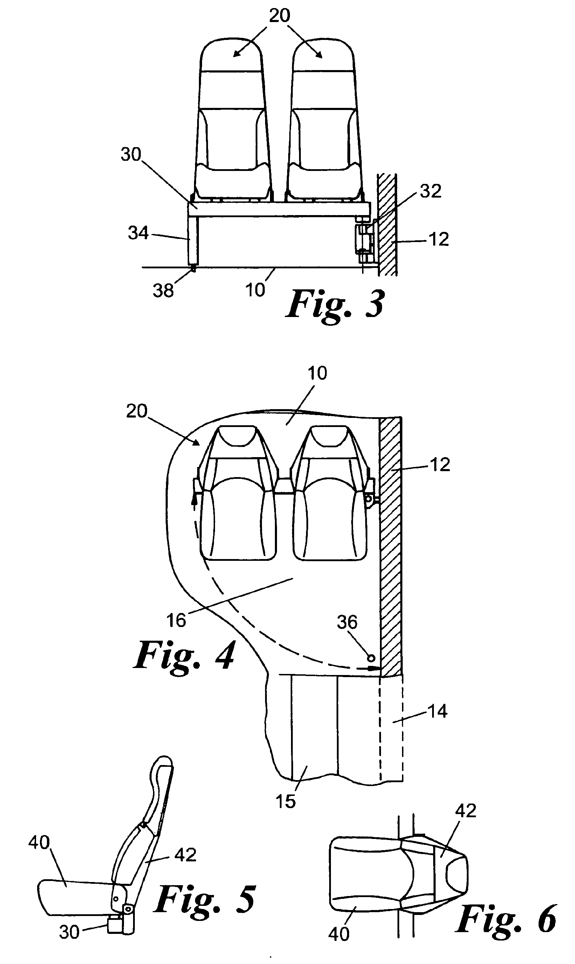

Referring in particular to Figure 1, each seat comprises a base 40 and a back 42. The back comprises a frame 44 which is pivotably mounted by mountings 45 on a pair of brackets 46 which are in turn mounted on the support beam 30. This enables the whole of the back to be pivoted between a reclined position, as shown in Figures 1 and 5, and a folded position, in which it is closer to vertical. In the folded position the back 42 is upright and substantially vertical. The base 40 is pivotably attached to the frame 44 by mountings 48 near its rear edge so that it can rotate about a horizontal axis. This enables the base to be moved between a substantially horizontal in-use position as shown in Figure 1 and a substantially vertical folded position. The back 42 further comprises an upper squab 50 and a lower squab 52 supported in the frame 44 and arranged to support upper and lower parts of the back of a passenger. The upper squab 50 is rigidly fixed to the frame. The lower squab 52 is pivotably mounted on the frame by mountings 54 so that it can be rotated about a horizontal axis. These mountings are located adjacent to the top of the front surface 56 of the lower squab 50, so that the axis they define extends across the top edge of that surface. This enables the lower squab to be folded from an in use position as shown in Figure 1, upwards through about 180° to a folded position in which its front surface 56 faces, and may be in contact with, the front face 58 of the upper squab 50.

In normal use the front seats 20 are in the position shown in Figures 1, 3 and 4. The support beam 30 extends transversely across the vehicle in its unfolded condition and the seats are also unfolded, with their bases 40 horizontal and backs 42 in a reclined or partially reclined position. The support leg 34 has its lower end locked in position in the second fixing mechanism 38. Figures 5 and 6 show the side view and plan of one of the seats 20 in this position.

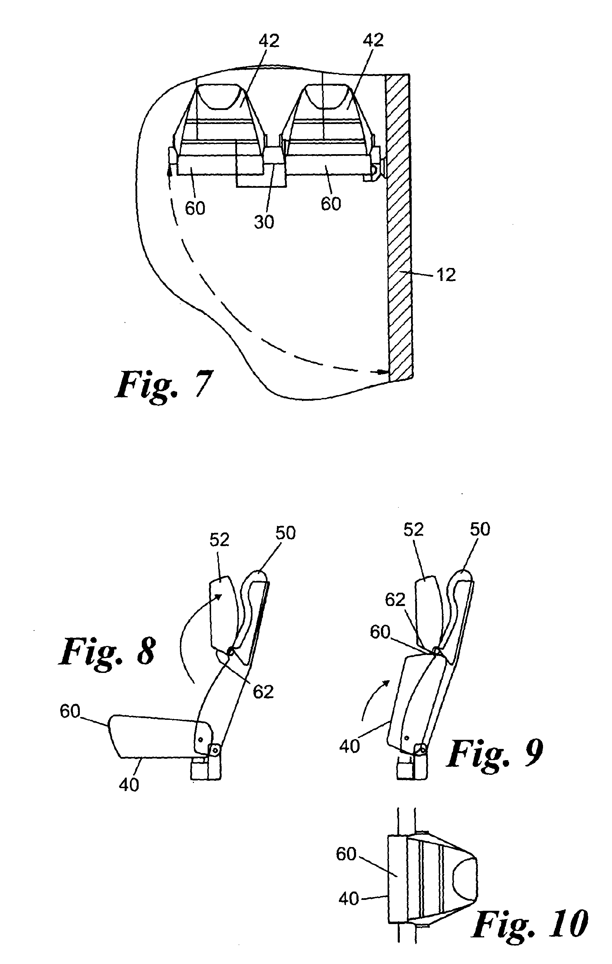

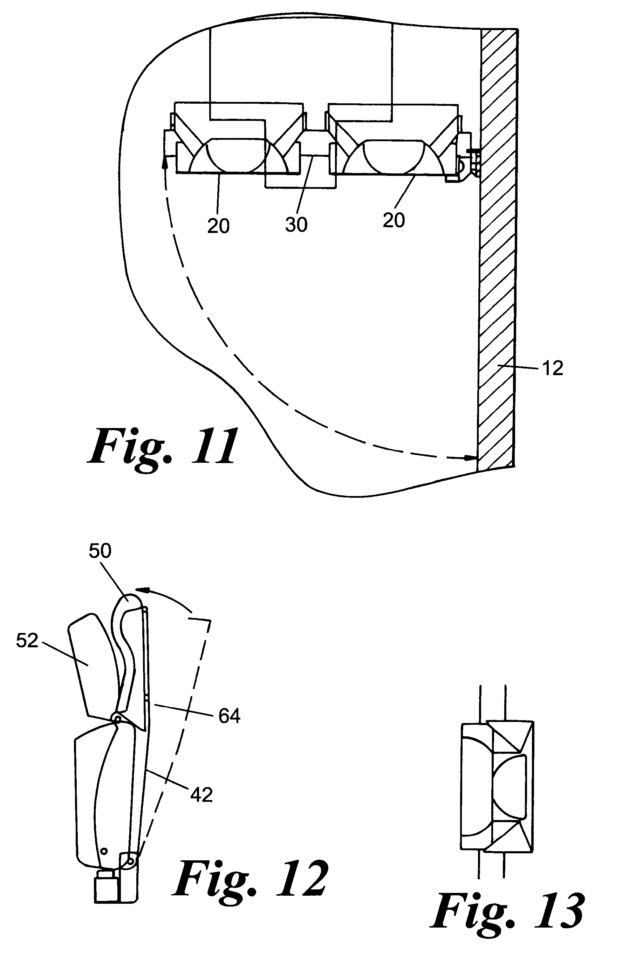

Referring to Figure 8, the first stage of folding each of the seats 20 is to fold the lower squab 52 upwards into its folded position. Then the seat base 40 is folded upwards into its folded position as shown in Figures 9 and 10, so that its front edge 60 is located below what is now the lower edge 62 (the upper edge when in its in use position) of the lower squab 52. In this position the base 40 occupies at least part of the space occupied by the lower squab 52 when the lower squab is in its in-use position. This brings the seat 20 into the position shown in Figure 10, and the front seating system into the position shown in Figure 7. As can be seen from these plan views, the seat backs 42 still take up a significant amount of space to the rear of the support beam 30 because of their reclined positions. Therefore the next stage in the folding process is to rotate the seat backs 42 into their upright folded position as shown in Figure 12, by rotating the frame 44 about its horizontal pivot axis. In this folded position the back surface 64 of each seat back 42 is substantially vertical. As can be seen from the plan views of Figures 11 and 13, with the seats 20 in the fully folded positions, the space that they take up, that is the area they take up in plan view, is significantly reduced, and in this embodiment their width in the front-rear direction is less than 250mm.

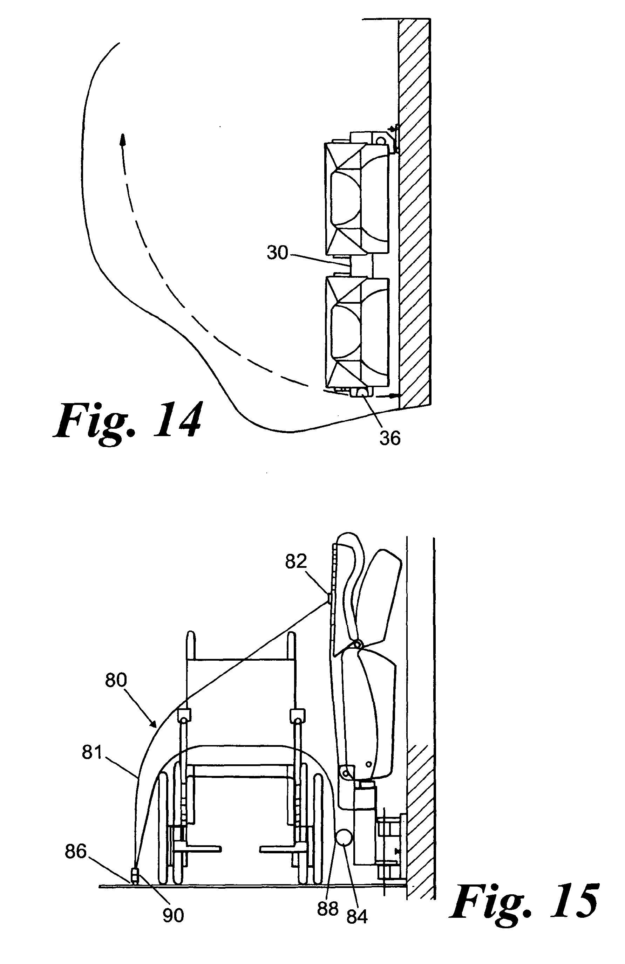

The final stage of the folding is to release the fixing mechanism 38 that secures the support beam 30 in its unfolded position, and swing the support beam about its vertical pivot axis until it is substantially parallel to the side wall 12 of the coach as shown in Figure 14. The support beam is then secured in this folded position by means of the first fixing mechanism 36. In this position, the underside of each of the folded seat bases 40, and the surface of each of the lower squabs 52 which is its back surface when in use, but faces forward when the lower squab 52 is folded upwards, each faces, and is substantially parallel to, the side wall 12 of the coach. The seat assembly is therefore folded against an area of the side wall 12 between the door 14 and the second row of seats 22. This leaves the area 16 of the floor 10 between the second row of seats 22 and the steps 15 substantially clear for a wheelchair.

Referring to Figure 2, the vehicle also includes a restraining system 72 for holding a wheelchair 70 in position on the floor area 16. The restraining system 72 is arranged to support the wheelchair 70 in a forward facing position and includes a rigid barrier in the form of a removable T-bar 74 and tethering means in the form of a pair of tethering straps 76. The T-bar is arranged to be removably located in a socket 78 which is sunk into the floor area 16. When in position it projects upwards from the floor area 16 and is arranged to engage with the wheelchair 70, in this case in a position part way up the back of the wheelchair, to prevent backward movement of the wheelchair from its secured position. The tethering straps 76 are attached to tether points 80, which again can be sunk into the floor area 16, and are arranged to be releasably secured to the wheelchair 70 to prevent it from moving forwards from its secured position. The straps 76 also hold the wheelchair down, and prevent its sideways movement.

When a wheelchair is to be transported on the vehicle, the front seats 20 are folded as described above. The wheelchair is then lifted up into the vehicle using a wheelchair lift. In this embodiment the lift is stowed below one of the steps 15 and is arranged to lift the wheelchair up to a position over the steps 15 level with the floor area 16. The wheelchair 70 can then be pushed onto the floor area 16, moved against the T-bar 74 which has been placed in its operative position, and secured in position using the tether straps 76. In the secured position the wheelchair 70 partly occupies the position that is occupied by the folding seat system when the seat system is in use for carrying passengers.

Referring to Figure 15, the vehicle also includes a passenger restraint system 80, in the form of a seatbelt 81, for the passenger who is being transported in the wheelchair 70. This is a three-point restraint, with the upper 82 and lower 84 support points on one side being mounted on the folding seating system of the front seats 20, and the support point 86 on the other side being attached to the floor 10. Specifically the upper support point 82 is located on the back of one of the seats 20, in this case on the frame 44. In order for the frame to be able to withstand the forces on it in the event of an accident, a locking mechanism can be provided to lock the seat back in its upright folded position. In a modification to this arrangement, a separate support, such as a post extending upwards from the support beam 30, can be provided with the upper support provided on it. The lower support point 84 is also attached to the seating system, in this case to a rigid bar extending downwards from the support beam 30. A seatbelt retractor real 88 is provided at the lower support point 84 so that, when not in use, the passenger restraint will be retracted and held against the back of one of the seats 20. When the passenger restraint 80 is to be used, a buckle 90 on the belt 81 is pulled across the passenger so that the belt passes over the lap and across the chest of the passenger, and the buckle is secured to the third support point 86 in the coach floor.

It will be appreciated that various modifications can be made to the embodiments described. For example, whereas it is particularly advantageous for the two adjacent seats 20 to be formed in a combined seating system, so that both of them are supported on a common beam 30 and both can be folded together, it might in some cases be appropriate for a single seat to be provided that folds in the same way, depending on the layout of the vehicle. Also the location of the folding seating system may vary depending on the layout of the vehicle. Where wheelchair access to the vehicle is at the rear, a rear seat or pair of seats may be formed as a folding seating system similar to that described above. However, in this case it might fold back against the vehicle wall instead of forwards.

The wheelchair restraint system can also differ from that described above. While it is a significant advantage for the barrier and tethers to be fixed to the vehicle floor on the same side of the wheelchair, in this case to the rear, other arrangements such as a set of front and rear tethers could be used instead. However these would then be more time consuming to operate.

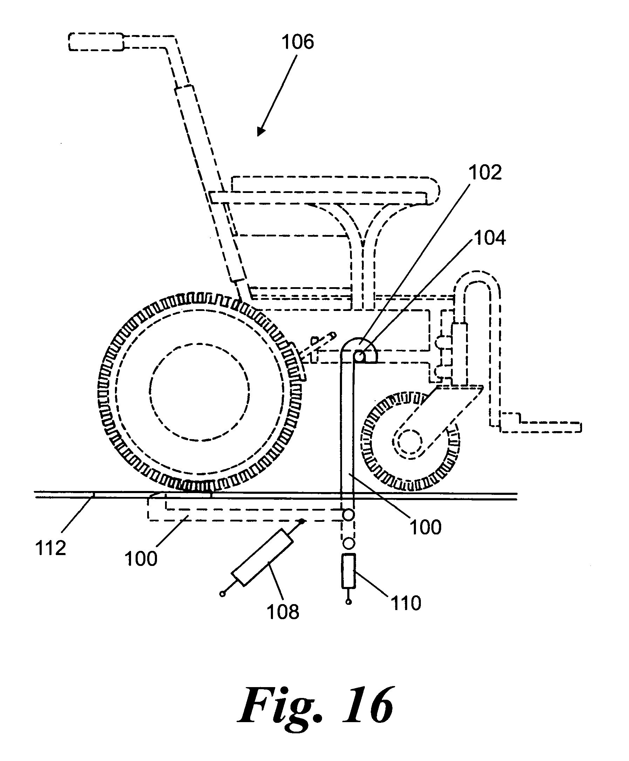

Referring to Figure 16, in a further embodiment, the wheelchair securing system is automated. It comprises a grabber arm 100 with a hook 102 at one end that is arranged to locate on a suitable bar 104 on the underside of the wheelchair 106. The grabber arm is movable by a first actuator 108 which rotates it from a stowed position in which it lies in a recess in the vehicle floor 112 below the floor surface, into a raised position, and then downwards linearly by means of a further actuator 110 so as to engage with bar 104. This system therefore provides a fixing mechanism that can be deployed to locate the wheelchair in position and secure it there. A control system is provided so that the fixing mechanism can be operated remotely by the driver of the vehicle, from his seat. In order to provide more secure location of the wheelchair a pair of grabber arms 100 can be used.

Indeed in a further embodiment, the seat folding system is arranged to fold in a fully automated manner. A number of actuators are arranged to secure and release the fixing mechanisms 36, 38, to fold the individual seats 20 into their folded positions, and to fold the seat assembly against the coach wall 12. These can comprise individual actuators controlled individually by a control unit, or a combination of actuators and cams that, for example, cause the seats to fold up as the support beam is folded against the wall.

## Claims

1. A vehicle seating system comprising support means and a mounting for the support means arranged to enable the support means to pivot about a vertical axis between an unfolded position and a folded position, and a seat supported on the support means and comprising a base and a back, wherein the base is pivotable about a horizontal axis between an in use position and a folded position.

2. A system according to claim 1 wherein the seat back is pivotable between an in use position and a folded position.

3. A system according to claim 1 or claim 2 wherein the seat back comprises an upper back portion and a lower back portion, and the lower back portion is pivotable about a horizontal axis from an in use position upwards into a folded position and the base is pivotable about a horizontal axis upwards into a folded position.

4. A system according to claim 3 wherein the lower back portion in its in use position occupies some of the space occupied by the base in its folded position.

5. A system according to any foregoing claim wherein the seat back includes a frame which is pivotable between a reclined position and an upright position, and wherein the frame can be in its upright position when the seat base is in its folded position.

6. A vehicle including a seating system according to any foregoing claim.

7. A vehicle according to claim 6 comprising a plurality of seating systems one of which is closest to a door of the vehicle, said one being according to any foregoing claim.

8. A vehicle according to claim 6 or claim 7 including a side wall, wherein the seat base is arranged to be substantially parallel to the side wall when the seating system is in its folded position.

9. A vehicle according to any of claims 6 to 8 further comprising wheelchair restraining means arranged to restrain a wheelchair in the vehicle.

10. A vehicle according to claim 9 wherein the restraining means is arranged to restrain the wheelchair such that the wheelchair is in a position which is at least partly occupied by the seating system when the seating system is in its in-use position.

11. A vehicle according to claim 9 or claim 10 wherein the restraining means comprises a rigid barrier arranged to prevent movement of the wheelchair in one direction, and tethering means arranged to prevent movement of the wheelchair in an opposite direction.

12. A vehicle according to claim 9 or claim 10 further comprising actuation means arranged to operate the wheelchair restraining means.

13. A vehicle according to claim 12 wherein the wheelchair restraining means is movable between a stowed position in which it is below the level of a floor of the vehicle, and a deployed position in which it is arranged to engage the wheelchair.

14. A vehicle according to any of claims 9 to 13 further comprising a passenger restraint arranged to restrain a passenger in the wheelchair.

15. A vehicle according to claim 14 wherein the passenger restraint is attached to the seating system.

16. A vehicle according to claim 15 wherein the passenger restraint is attached at upper and lower attachment points to the seating system.

17. A vehicle according to claim 16 wherein the passenger restraint includes a belt retraction means arranged to retract the passenger restraint against the seating system when not in use.

18. A vehicle seating system or vehicle, according to any foregoing claim wherein the seat back comprises an upper back portion and a lower back portion, and the lower back portion is pivotable about a horizontal axis from an in use position upwards into a folded position and the base is pivotable about a horizontal axis upwards into a folded position.

19. A system or vehicle according to claim 18 wherein the lower back portion in its in use position occupies some of the space occupied by the base in its folded position.

20. A system or vehicle according to claim 18 or claim 19 wherein the seat back includes a frame which is pivotable between a reclined position and an upright position, and wherein the frame can be in its upright position when the seat base is in its folded position.

21. A vehicle seating system, comprising a seat base and a seat back, wherein the seat back comprises an upper back portion and a lower back portion, and the lower back portion is pivotable about a horizontal axis from an in use position upwards into a folded position and the base is pivotable about a horizontal axis upwards into a folded position.
